# FASCICULE DE BREVET EUROPEEN

(11) **EP 2 486 970 B1**
(45) Date de publication et mention de la délivrance du brevet: **17.12.2014**
(21) Numéro de dépôt: 12154599.0
(22) Date de dépôt: 09.02.2012
(51) Int. Cl.: B01D 53/50, B01D 53/68

(54) **Procédé d'épuration de fumées de combustion utilisant du bicarbonate ou du sesquicarbonate de sodium**
Verfahren zur Reinigung von Verbrennungsabgasen mittels Natriumhydrogencarbonat oder Natriumsesquicarbonat
Method for purifying flue gases using sodium bicarbonate or sesquicarbonate

(30) Priorité: 10.02.2011 FR 1151084
(43) Date de publication de la demande: 15.08.2012
(73) Titulaire: LAB SA, 69007 Lyon (FR)
(72) Inventeur: Siret, Bernard, 69200 VENISSIEUX (FR); Tabaries, Franck, 83190 OLLIOULES (FR)
(74) Mandataire: Grand, Guillaume

(56) Documents cités:
- EP-A1- 1 949 956
- EP-A2- 0 161 497
- EP-A2- 1 716 910
- DE-A1-102008 029 937
- FR-A1- 2 740 356
- FR-A1- 2 751 560

## Description

La présente invention concerne un procédé d'épuration de fumées de combustion.

De nombreuses activités industrielles génèrent des oxydes de soufre, ainsi que d'autres gaz polluants acides qu'il faut traiter. On peut citer les incinérateurs, les fours cimentiers ou les raffineries de pétrole.

Pour traiter ces gaz acides, au rang desquels on trouve principalement les dioxydes de soufre (SO₂) et l'acide chlorhydrique (HCl), plusieurs procédés sont connus et d'utilisation commerciale courante.

Tout d'abord, on trouve des procédés humides, dans lesquels les gaz à épurer sont mis en contact avec un liquide de lavage qui va, par absorption, capter les polluants acides et les neutraliser. Plusieurs technologies sont disponibles, depuis les laveurs utilisant une pulvérisation en pluie, jusqu'aux laveurs à garnissage, en passant par les laveurs à plateaux. Si ces procédés sont très efficaces et produisent comparativement peu de résidus solides, ils sont plutôt chers en termes d'investissement.

On trouve ensuite les procédés secs, dans lesquels un réactif de neutralisation, usuellement de la chaux ou du bicarbonate de sodium, est injecté dans le gaz à épurer, et dans lesquels le produit de la réaction ainsi que l'excès de réactif sont collectés dans un filtre à manches ou dans un électrofiltre. Ces procédés, moins gourmands en investissement, souffrent de coûts opératoires sensiblement plus élevés que ceux des procédés humides car un excès de réactif est nécessaire à une épuration poussée, ce qui se traduit par davantage de coûts pour ce réactif et surtout pour le traitement et la mise en décharge des résidus solides.

On a cherché à améliorer cette situation avec les procédés semi-secs, dans lesquels le réactif est mis en contact avec les gaz à épurer non pas sous forme solide, mais sous forme d'un liquide ou d'une bouillie, usuellement un lait de chaux. Au contact des gaz chauds, l'eau s'évapore, laissant in fine un résidu solide d'une composition similaire à celle des procédés secs, qui est collecté sur un filtre ou un électrofiltre. La quantité consommée de réactif est moindre, tout comme la quantité de résidus produits. Ce progrès se paye au prix, à la fois, d'une complexité plus grande, puisqu'un réacteur d'atomisation-évaporation est indispensable, et d'une récupération énergétique moindre, puisqu'il faut conserver les fumées à une température suffisante pour l'évaporation du liquide.

Les procédés secs sont donc favorisés quand l'investissement doit être minimisé et qu'on cherche un excellent rapport entre les performances et le coût. Principalement deux réactifs sont utilisés, bien que d'autres soient possibles, à savoir le bicarbonate de sodium (NaHCO₃) et la chaux (Ca(OH)₂). Ainsi, EP-A-1 949 956, provenant du même Demandeur que la présente, divulgue un procédé d'épuration de fumées de combustion, comprenant des étapes suivant lesquelles :
- on introduit dans un filtre des fumées, qui sont mélangées à de la chaux ou du bicarbonate de sodium pour en neutraliser les polluants acides, et qui présentent une température comprise entre 130°C et 180°C,
- on admet, dans un réacteur de conditionnement, entre 40 et 95% des résidus solides issus du filtre, ainsi qu'un gaz de conditionnement, tel que de l'air sec ou un mélange d'air et de vapeur d'eau, avec un temps de passage compris entre 30 secondes et 8 minutes, et
- on recycle vers le filtre les solides issus du réacteur de conditionnement, en les mélangeant aux fumées en amont du filtre.

EP-A-1 716 910, provenant également du même Demandeur, divulgue un procédé similaire.

Dans ces procédés secs, le bicarbonate, plus onéreux que la chaux, peut être préféré car la quantité de résidus qu'il génère est moindre. Pour être actif, le bicarbonate doit cependant être broyé et introduit dans une veine gazeuse suffisamment chaude pour promouvoir la réaction 2 NaHCO₃→ Na₂CO₃ + H₂O + CO₂ qui, par éclatement des grains, va donner une grande surface spécifique et assurer l'efficacité du procédé. II faut ainsi trois critères pour assurer une bonne utilisation de ce réactif à des fins d'épuration des fumées : une température assez élevée, de préférence supérieure à 160°C, un temps de contact du bicarbonate avec les fumées suffisant (de l'ordre de la seconde), et un produit broyé suffisamment fin. Toutefois, opérer à des températures élevées présente deux inconvénients : la récupération de chaleur est limitée et, souvent, on se préoccupe aussi de la captation du mercure pouvant être présent, par des adsorbants minéraux, comme du charbon actif, qui sont injectés en même temps que le bicarbonate. Or les capacités de captation du mercure par ces produits se dégradent vite avec la température. On peut donc être amené à utiliser le bicarbonate à une température modérée, ou bien dans des conditions peu favorables, avec pour effet net une moindre efficacité, impliquant un ratio stoechiométrique plus élevé, ce qui n'est pas économiquement satisfaisant.

Le but de la présente invention est d'améliorer les procédés d'épuration secs existants, pour permettre l'utilisation du bicarbonate ou du sesquicarbonate de sodium comme agent d'épuration de fumées de combustion, à des températures faibles et avec une efficacité élevée.

A cet effet, l'invention a pour objet un procédé d'épuration de fumées de combustion, tel que défini à la revendication 1.

L'idée à la base de l'invention part du constat que, pour être utilisé de manière efficace, le bicarbonate ou le sesquicarbonate de sodium doit être exposé à une température suffisante de façon à ce que la réaction de décomposition 2 NaHCO₃→ Na₂CO₃ + H₂O + CO₂ puisse se produire. Les résidus, qui sont collectés par un filtre traversé par un mélange de fumées à épurer et de bicarbonate ou de sesquicabonate de sodium, contiennent ainsi encore une fraction de bicarbonate ou de sesquicabonate, qui n'a pas réagi. Une des caractéristiques de l'invention est de soumettre ces résidus à l'action de la vapeur d'eau, à une température d'au moins 200°C dans un contacteur gaz-solide, formant ainsi un réacteur de réactivation, qui fournit un temps de contact d'au moins 1 minute pour les solides, et de préférence compris entre 2 et 5 minutes. Cette exposition à une température plus élevée que celle à laquelle les solides ont été exposés lors de leur contact avec les fumées à épurer, et pendant un temps beaucoup plus long que le temps pendant lequel ils ont été au contact avec les fumées, a plusieurs conséquences très bénéfiques sur l'utilisation du bicarbonate ou du sesquicabonate, et donc sur la consommation ou bien le ratio stoechiométrique.

Tout d'abord, la réaction de décomposition du bicarbonate ou du sesquicabonate encore présent est promue. Lors de cette réaction, les grains éclatent, augmentant leur surface active de manière importante. II est à noter qu'une partie de ce bicarbonate ou sesquicarbonate, qui n'a pas réagi, est située au coeur des grains et est entourée par une couche de sels issus de la réaction de neutralisation des polluants acides, tels que NaCl et Na₂SO₄ à des degrés d'hydratation divers, laquelle couche de sels gêne l'accès des polluants au coeur, notamment le dioxyde de soufre et l'acide chlorhydrique. Cette réaction, qui a pour effet une explosion des grains, contribue à casser la couche externe des sels et à remettre à la surface du produit vierge, restaurant une grande réactivité.

Par ailleurs, l'exposition à la vapeur d'eau va induire des réactions d'hydratation en surface. La formation d'hydrates, dont le volume molaire est plus important que celui du sel non hydraté, conduit aussi à modifier, localement, la structure cristalline, provoquant aussi des failles dans la croûte de sels qui entoure le coeur non encore réagi.

De plus, une augmentation, même temporaire, de l'humidité est favorable à la captation des gaz acides que sont l'acide chlorhydrique et le dioxyde de soufre.

Aussi, l'exposition à la vapeur d'eau va permettre la diffusion de cette vapeur d'eau à l'intérieur des pores des grains solides. Lors de la réintroduction des solides dans la veine gazeuse, la pression partielle de la vapeur d'eau va brusquement passer de, par exemple, 1 bar environ, notamment dans le cas où l'atmosphère gazeuse dans le réacteur est constituée à 100% de vapeur d'eau, à environ 0,15 bar, notamment dans le cas habituel où les fumées à épurer contiennent autour de 15% d'humidité. Cette libération brutale va avoir pour effet de provoquer un élargissement des pores, augmentant d'autant la réactivité des gains.

De plus, lors de la réintroduction des solides recyclés dans les fumées, il y a refroidissement rapide des solides qui viennent d'être exposés à la vapeur d'eau : localement et temporairement, de par la présence de sels hygroscopiques, une humidité importante va se créer en surface des grains, induisant des conditions très favorables à la captation de l'acide chlorhydrique et du dioxyde de soufre.

Des caractéristiques additionnelles avantageuses du procédé conforme à l'invention, prises isolément ou selon toutes les combinaisons techniquement possibles, sont spécifiées aux revendications dépendantes 2 à 9.

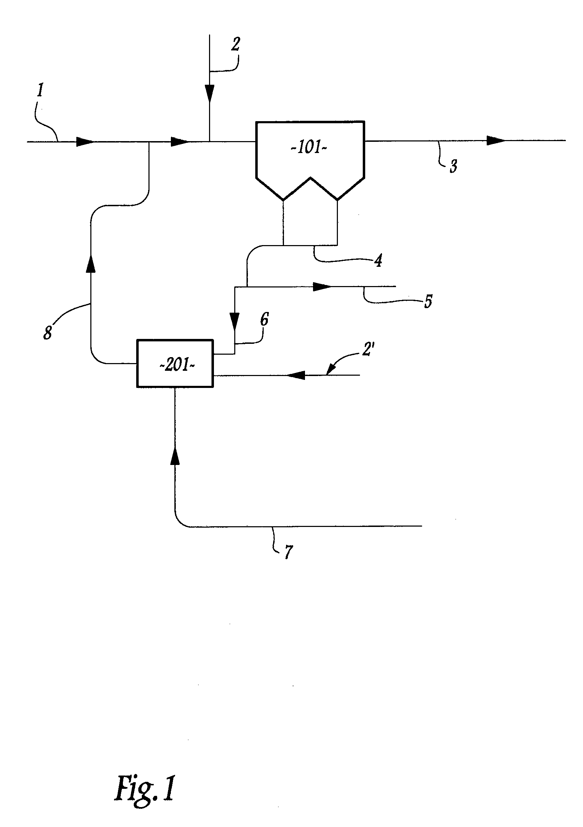

L'invention sera mieux comprise à la lecture de la description qui va suivre, donnée uniquement à titre d'exemple et faite en se référant à la figure 1 représentant schématiquement une installation de mise en oeuvre d'un procédé d'épuration conforme à l'invention.

Sur la figure 1, des fumées à épurer 1, qui proviennent d'une unité de combustion, telle qu'un incinérateur de déchets ou une centrale de production d'énergie, et qui contiennent des polluants acides comme du dioxyde de soufre et/ou de l'acide chlorhydrique, sont introduites dans un filtre 101, après mélange avec, à la fois, un flux 8, détaillé plus loin, et un flux de réactif de neutralisation 2. Le flux 2 est constitué de bicarbonate de sodium ou de sesquicarbonate de sodium, autrement appelé « Trona ».

Le mélange entre les fumées à traiter 1 et les flux 2 et 8 présente une température comprise entre 130°C et 180°C quand ce mélange entre dans le filtre 101. Selon une des caractéristiques de l'invention, le filtre 101 opère à une température comprise entre 130°C et 180°C, de préférence entre 130°C et 160°C. En pratique, ce filtre 101 est d'une technologie connue en soi. Par exemple, ce filtre est un filtre à manches ou un électrofiltre.

En sortie du filtre 101, on récupère, d'une part, des fumées épurées 3, qui sont évacuées soit vers une cheminée, soit vers un traitement complémentaire, non objet de l'invention, et, d'autre part, des résidus solides 4. Une partie 5 des résidus solides collectés 4 est évacuée, en constituant la sortie nette des résidus de l'installation, tandis que la partie restante 6, qui représente entre 30 et 95% du débit total des résidus 4, est dirigée vers un réacteur 201.

Selon l'invention, un flux 7 de vapeur d'eau, présentant une température comprise entre 200°C et 450°C, est également introduite dans le réacteur 201. Avantageusement, cette vapeur d'eau peut être surchauffée.

Le réacteur 201, qui est d'une technologie connue en soi, est prévu pour, selon une des caractéristiques de l'invention, mettre en contact les résidus solides 6 avec la vapeur d'eau 7 pendant au moins une minute, de préférence pendant une durée comprise entre 2 et 5 minutes. De la sorte, moyennant l'alimentation du réacteur 201 par de la vapeur d'eau 7 avec une quantité comprise entre 100 à 500 kilogrammes par tonne de résidus solides 6, le bicarbonate ou le sesquicarbonate, n'ayant pas encore réagi avec les polluants acides des fumées 1 avant d'être récupéré dans les résidus solides 4, est réactivé, comme expliqué en détail plus haut.

En pratique, le réacteur de réactivation 201 est par exemple constitué d'une vis sans fin ou d'une double vis sans fin, pourvue de moyens d'introduction de la vapeur d'eau 7. D'autres technologies sont possibles pour le réacteur de réactivation.

Les résidus solides, qui sortent du réacteur 201 et qui contiennent le bicarbonate ou le sesquicarbonate réactivé, constituent le flux précité 8 et sont recyclés vers le filtre 101.

A titre de variante optionnelle, en complément ou bien en total remplacement du bicarbonate frais ou du sesquicarbonate frais introduit directement dans les fumées 1 par le flux 2, un flux 2' de bicarbonate frais ou de sesquicarbonate frais est admis dans le réacteur 201 et se trouve ainsi mélanger aux solides recyclés 8 renvoyés dans les fumées 1 en amont du filtre 101.

## Revendications

1. Procédé d'épuration de fumées de combustion, comprenant des étapes suivant lesquelles :
- on introduit dans un filtre (101) des fumées (1), qui sont mélangées à du bicarbonate de sodium ou du sesquicarbonate de sodium (2 ; 2' ; 2, 2') pour en neutraliser les polluants acides, et qui présentent une température comprise entre 130°C et 180°C,
- on admet dans un réacteur de réactivation (201 :
. une fraction (6) des résidus solides (4) issus du filtre (101), cette fraction étant comprise entre 30% et 95% du débit total des résidus solides issus du filtre, et
. de la vapeur d'eau (7), qui présente une température comprise entre 200 °C et 450°C et dont la quantité est comprise entre 100 et 500 kilogrammes par tonne de ladite fraction de résidus solides (6),
les résidus solides étant mis en contact avec la vapeur d'eau par le réacteur de réactivation pendant au moins une minute, et
- on recycle vers le filtre (101) les solides (8) issus du réacteur de réactivation (201), en les mélangeant aux fumées (1) en amont du filtre.

2. Procédé suivant la revendication 1, **caractérisé en ce que** du bicarbonate de sodium frais ou du sesquicarbonate de sodium frais (2) est introduit directement dans les fumées (1) en amont du filtre (101).

3. Procédé suivant l'une des revendications 1 ou 2, **caractérisé en ce que** du bicarbonate de sodium frais ou du sesquicarbonate de sodium frais (2') est admis dans le réacteur de réactivation (201) et est envoyé jusqu'aux fumées (1) avec les solides recyclés (8) issus du réacteur d'activation.

4. Procédé suivant l'une des revendications précédentes, **caractérisé en ce que** les fumées (1) introduites dans le filtre (101) présentent une température comprise entre 130°C et 160 °C.

5. Procédé suivant l'une des revendications précédentes, **caractérisé en ce que** les résidus solides (6) sont mis en contact avec la vapeur d'eau (7) par le réacteur de réactivation (201) pendant une durée comprise entre 2 et 5 minutes.

6. Procédé suivant l'une des revendications précédentes, **caractérisé en ce qu'**on fait fonctionner le filtre (101) à une température comprise entre 130°C et 180°C, de préférence entre 130 °C et 160 °C.

7. Procédé suivant l'une des revendications précédentes, **caractérisé en ce que** la vapeur d'eau (7) admise dans le réacteur de réactivation (201) est surchauffée.

8. Procédé suivant l'une des revendications précédentes, **caractérisé en ce que** le réacteur de réactivation (201) est une vis sans fin ou une double vis sans fin, qui est pourvue de moyens d'introduction de la vapeur d'eau.

9. Procédé suivant l'une des revendications précédentes, **caractérisé en ce que** le filtre (101) est un filtre à manches ou un électro-filtre.

## Patentansprüche

1. Verfahren zum Reinigen von Abgasen, folgende Schritte umfassend:
- Einführen der Abgase (1) in ein Filter (101), die mit einem Natriumbikarbonat oder einem Natriumsesquikarbonat (2; 2'; 2, 2') zum Neutralisieren der säurehaltigen Schadstoffe gemischt sind und eine Temperatur zwischen 130°C und 180°C aufweisen,
- Zuführen in einen Reaktivierungsreaktor (201):
- einen Anteil (6) von feste Reststoffen (4), die aus dem Filter (101) stammen, wobei dieser Anteil zwischen 30% und 95% des Gesamtdurchsatzes der aus dem Filter stammenden Reststoffe beträgt, und
- Wasserdampf (7), der eine Temperatur zwischen 200°C und 450°C aufweist und dessen Menge zwischen 100 und 500 Kilogramm pro Tonne des Anteils der festen Reststoffe (6) liegt,
wobei die festen Reststoffe durch den Reaktivierungsreaktor während mindestens einer Minute mit dem Wasserdampf in Kontakt gebracht werden, und
- Recyceln der aus dem Reaktivierungsreaktor (201) stammenden Feststoffe (8) in den Filter (101), indem sie mit den Abgasen (1) vor dem Filter gemischt werden.

2. Verfahren nach Anspruch 1, **dadurch gekennzeichnet, dass** frisches Natriumbikarbonat oder frisches Natriumsesquikarbonat (2) direkt in die Abgase (1) vor dem Filter (101) eingeführt wird.

3. Verfahren nach einem der Ansprüche 1 oder 2, **dadurch gekennzeichnet, dass** das frische Natriumbikarbonat oder das frische Natriumsesquikarbonat (2') dem Reaktivierungsreaktor (201) zugeführt wird und zu den Abgasen (1) mit den recycelten, aus dem Aktivierungsreaktor stammenden Feststoffen geschickt wird.

4. Verfahren nach einem der vorhergehenden Ansprüche, **dadurch gekennzeichnet, dass** die in das Filter (101) eingeführten Abgase (1) eine Temperatur zwischen 130°C und 160°C aufweisen.

5. Verfahren nach einem der vorhergehenden Ansprüche, **dadurch gekennzeichnet, dass** die festen Reststoffe (6) von dem Reaktivierungsreaktor (201) mit dem Wasserdampf (7) während einer Dauer zwischen 2 und 5 Minuten in Kontakt gebracht werden.

6. Verfahren nach einem der vorhergehenden Ansprüche, **dadurch gekennzeichnet, dass** das Filter (101) bei einer Temperatur zwischen 130°C und 180°C, vorzugsweise zwischen 130°C und 160°C, betrieben wird.

7. Verfahren nach einem der vorhergehenden Ansprüche, **dadurch gekennzeichnet, dass** der in den Reaktivierungsreaktor (201) zugeführte Wasserdampf (7) überhitzt ist.

8. Verfahren nach einem der vorhergehenden Ansprüche, **dadurch gekennzeichnet, dass** der Reaktivierungsreaktor (201) eine Schnecke oder eine Doppelschnecke ist, die mit Mitteln zur Einführung des Wasserdampfes versehen ist.

9. Verfahren nach einem der vorhergehenden Ansprüche, **dadurch gekennzeichnet, dass** das Filter (101) ein Schlauchfilter oder ein Elektrofilter ist.

## Claims

1. Method of purifying combustion fumes, comprising steps according to which:
- fumes (1), which are mixed with sodium bicarbonate or sodium sesquicarbonate (2; 2'; 2, 2') for neutralising their acid pollutants and which have a temperature of from 130°C to 180°C, are introduced into a filter (101),
- there are fed into a reactivation reactor (201):
. a portion (6) of the solid residues (4) that emerge from the filter (101), that portion being from 30 % to 95 % of the total flow of solid residues that emerge from the filter, and
. steam (7) which has a temperature of from 200°C to 450°C and the amount of which is from 100 to 500 kilograms per tonne of said portion of solid residues (6),
the solid residues being placed in contact with the steam by the reactivation reactor for at least one minute, and
- the solids (8) that emerge from the reactivation reactor (201) are recycled to the filter (101) by admixing them with the fumes (1) upstream of the filter.

2. Method according to claim 1, **characterised in that** fresh sodium bicarbonate or fresh sodium sesquicarbonate (2) is introduced directly into the fumes (1) upstream of the filter (101).

3. Method according to one of claims 1 or 2, **characterised in that** fresh sodium bicarbonate or fresh sodium sesquicarbonate (2') is fed into the reactivation reactor (201) and is conveyed to the fumes (1) together with the recycled solids (8) that emerge from the activation reactor.

4. Method according to one of the preceding claims, **characterised in that** the fumes (1) introduced into the filter (101) have a temperature of from 130°C to 160°C.

5. Method according to one of the preceding claims, **characterised in that** the solid residues (6) are placed in contact with the steam (7) by the reactivation reactor (201) for a period of from 2 to 5 minutes.

6. Method according to one of the preceding claims, **characterised in that** the filter (101) is caused to operate at a temperature of from 130°C to 180°C, preferably from 130°C to 160°C.

7. Method according to one of the preceding claims, **characterised in that** the steam (7) fed into the reactivation reactor (201) is superheated.

8. Method according to one of the preceding claims, **characterised in that** the reactivation reactor (201) is a screw conveyor or double screw conveyor which is provided with means for introduction of the steam.

9. Method according to one of the preceding claims, **characterised in that** the filter (101) is a bag filter or electrostatic filter.
